# EUROPÄISCHE PATENTANMELDUNG

(11) **EP 2 573 889 A2**
(43) Veröffentlichungstag der Anmeldung: **27.03.2013**
(21) Anmeldenummer: 12005224.6
(22) Anmeldetag: 16.07.2012
(51) Int. Cl.: H02G 3/06, H01R 4/64

(54) **Kupplungselement mit Erdungsfunktion für Leitungsführungskanäle**

(30) Priorität: 23.09.2011 DE 202011106065 U
(71) Anmelder: Tehalit GmbH, 67716 Heltersberg (DE)
(72) Erfinder: Schwarz, Jürgen, 67705 Trippstadt (DE)
(74) Vertreter: Nuss, Laurent

(57) **Zusammenfassung**

Die Erfindung betrifft ein Kupplungselement zur Verbindung zweier aufeinanderstoßender Kabelkanalabschnitte und zum Potentialausgleich bei Leitungsführungskanälen aus Metall, bestehend aus einer in etwa rechteckförmigen Grundplatte (1) mit einer Außenseite und einer im Montagezustand zur Kanalmitte weisenden Innenseite, einer Fußleiste (7), einer Kopfleiste (8) und seitlichen Stirnleisten (13), wobei in der Grundplatte (1) wenigstens ein Federelement (3) in einem dreiseitigen Freischnitt (2) angeordnet ist, wobei zumindest ein Teil des Federelementes (3) an der Außenseite aus der Oberfläche der Grundplatte (1) herausragt. Die Kopfleiste (8) ist in etwa U-förmig zur Außenseite gewölbt. Ferner sind an der Außenseite der Grundplatte (1) Kontaktzähne (10) ausgebildet, die an der Außenseite gegenüber der Oberfläche der Grundplatte (1) abstehen.

## Beschreibung

Die vorliegende Erfindung betrifft ein Kupplungselement zur Verbindung zweier aufeinander stoßender Kabelkanalabschnitte bei Leitungsführungskanälen sowie einen damit ausgerüsteten Leitungsführungskanal.

Kupplungselemente werden zur Verbindung zweier aufeinander stoßender Kabelkanalabschnitte bei Leitungsführungskanälen eingesetzt. In der EP 0721243 B1 wird ein solches Kupplungselement beschrieben, welches aus einer Rückenplatte, einer etwa im rechten Winkel abgewinkelten Fußleiste, einer im stumpfen Winkel abgewinkelten Kopfleiste und zwei etwa im rechten Winkel abgewinkelten Stirnleisten besteht, wobei etwa im Zentrum der Rückenplatte durch einen dreiseitigen Freischnitt eine Zunge ausgebildet ist, die auf ihrer Außenseite eine Nase trägt. In der DE 20 2004 005 987 U1 wird ein Kupplungselement beschrieben, welches wenigstens zwei Federelemente aufweist, die gegenüberliegend angeordnet sind und aus der Oberfläche der Grundplatte des Kupplungselementes herausragen. Für einen Potentialausgleich müssen die Kabelkanalabschnitte elektrischen Kontakt haben. Dies geschieht entweder durch spezielle Potentialausgleichselemente, die eine Brücke zwischen den Kabelkanalabschnitten herstellen, oder durch Geräteeinbaukupplungen, die zur Herstellung eines elektrischen Kontaktes in den Kanal eingeschoben werden.

In der EP 20 12 390 A1 wird eine solche Erdungsklammer zum Einschieben in ein Kanalunterteil beschrieben. Das Einschieben solcher Geräteeinbaukupplungen bei Aluminiumkanälen ist jedoch sehr mühsam und erfordert vom Monteur bei der Montage einen sehr hohen Kraftaufwand. Dies ist unbefriedigend.

Es ist daher Aufgabe der vorliegenden Erfindung, ein alternatives Kupplungselement zur Verbindung zweier aufeinander stoßender Kabelkanalabschnitte und zum gleichzeitigen Potentialausgleich bei Leitungsführungskanälen aus Metall bereitzustellen, bei dem die Montage erleichtert wird.

Diese Aufgabe wird gelöst durch ein Kupplungselement mit den Merkmalen des Anspruchs 1. Bevorzugte Ausführungsformen finden sich in den Unteransprüchen wieder.

Das erfindungsgemäße Kupplungselement dient der Verbindung zweier aufeinander stoßender Kabelkanalabschnitte und ist für den Potentialausgleich bei Leitungsführungskanälen aus Metall, insbesondere Aluminiumkanälen, geeignet. Es besteht aus einer in etwa rechteckförmigen Grundplatte mit einer Außenseite und einer im Montagezustand zur Kanalmitte weisenden Innenseite. Ferner weist es eine Fußleiste, eine Kopfleiste und seitliche Stirnleisten auf. In der Grundplatte ist wenigstens ein Federelement in einem dreiseitigen Freischnitt angeordnet, wobei zumindest ein Teil des Federelementes an der Außenseite aus der Oberfläche der Grundplatte herausragt und eine Stoßkante bildet. Diese soll verhindern, dass das Kupplungselement beim Einschieben eines Kabelkanalabschnittes selbst in den Kanalabschnitt hineingeschoben wird, wodurch die Kupplungsfunktion nicht mehr gewährleistet würde. Erst beim Verbinden eines Kabelkanalabschnittes mit dem anderen wird das Federelement in der Endphase nach innen gedrückt, ohne jedoch dessen Position zu verändern. Beide Kabelkanalabschnitte sind nun fest miteinander verbunden.

Da das bisherige Einschieben von Kupplungselementen, die zugleich einen Potentialausgleich gewährleisten sollen, nur mühsam zu bewerkstelligen war, ist erfindungsgemäß vorgesehen, dass die Kopfleiste des Kupplungselementes in etwa U-förmig zur Außenseite gewölbt ist. Ferner sind für die elektrische Kontaktierung an der Außenseite der Grundplatte Kontaktzähne ausgebildet, die an der Außenseite gegenüber der Oberfläche der Grundplatte abstehen. Durch die gewölbte Kopfleiste ist ein Hereindrehen oder Schwenken des Kupplungselements in den Kabelkanalabschnitt möglich. Ein mühsames Einschieben des Bauteils in den Leitungsführungskanal ist nicht mehr erforderlich. Beim Herunterschwenken oder Hereindrehen der Kupplung über die U-förmig zur Außenseite gewölbte Kopfleiste schneiden sich die an der Außenseite der Grundplatte ausgebildeten Kontaktzähne in das Material des Leitungsführungskanals ein. Dadurch wird der elektrische Kontakt und somit Potentialausgleich sichergestellt. Das Hereindrehen bzw. Schwenken der Kupplung in den Kanal und das Einschneiden der Kontaktzähne in die Innenwand des Leitungsführungskanals funktioniert auch bei eloxierten oder lackierten Metallkanälen.

Vorzugsweise sind wenigstens zwei Kontaktzähne in einer Ausnehmung freigeschnitten und mehrere davon im Bereich der Kopfleiste in einer Reihe angeordnet. Je nach Kupplungsart kann ein Federelement mit einer darauf ausgebildeten Nase, die über der Oberfläche der Grundplatte herausragt, ausreichend sein. In einer weiteren

Ausführungsform befinden sich zwei Federelemente in einem gemeinsamen oder jeweils einem getrennten Freischnitt. Vorzugsweise sind die beiden Federelemente in einem Freischnitt gegenüberliegend angeordnet. Durch die Verwendung von zwei Federelementen kann das Kupplungselement entweder in den vorderen oder hinteren Kabelkanalabschnitt eingebaut werden. Vorzugsweise sind die beiden Federelemente jeweils in einem eigenen Freischnitt angeordnet und zumindest teilweise durch einen Steg voneinander getrennt. In einer weiteren Ausführungsform sind die Enden der Federelemente zur Innenseite abgewinkelt, um eine größere Stoßkante für den Kabelkanalabschnitt zu bieten.

Für den Potentialausgleich kann ferner an der Grundplatte zusätzlich eine Erdungsfahne in einem Freischnitt ausgebildet sein.

Zur Befestigung des Kupplungselementes werden Strukturen wie Führungen oder Halteleisten verwendet, die für den Halt des Kupplungselementes am Kanalunterteil sorgen. Hierfür sind die Stirnleisten und/oder die Fußleiste zur Innenseite vorzugsweise abgewinkelt. An der Fußleiste sind zum Abstützen des Kupplungselementes an dem Kanalunterteil vorzugsweise zur Innenseite abgewinkelte Laschen ausgebildet.

Die Erfindung betrifft ferner einen Leitungsführungskanal, bestehend aus einem Unterteil und einem Oberteil, der mit einem Kupplungselement der zuvor genannten Art ausgerüstet ist.

Die Erfindung wird in den nachfolgenden Zeichnungen näher erläutert. Es zeigen
- Fig. 1: eine isometrische Darstellung des erfindungsgemäßen Kupplungselementes, insbesondere dessen Innenseite und dessen Außenseite,
- Fig. 2: den Einbau des erfindungsgemäßen Kupplungselementes in einem Leitungsführungskanal.

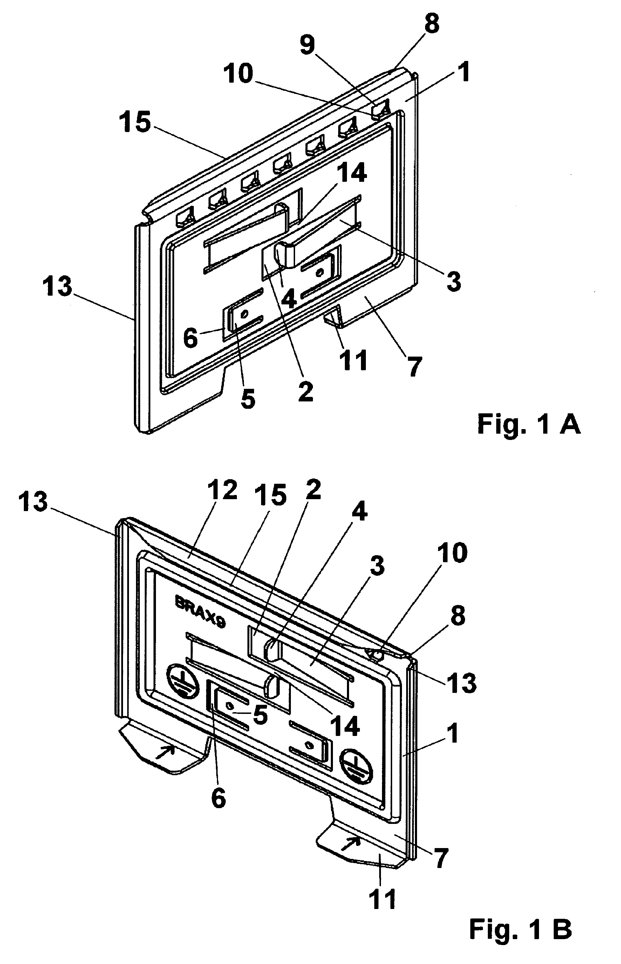

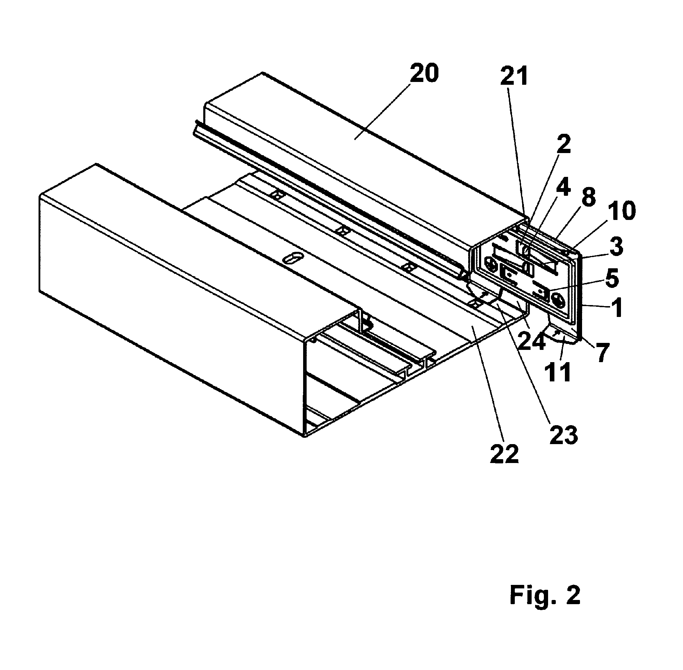

In Fig. 1A ist das erfindungsgemäße Kupplungselement von dessen Außenseite gezeigt. Man erkennt die in etwa rechteckförmige Grundplatte 1 sowie die beidseitig abgewinkelten Stirnleisten 13. An der Fußleiste 7 sind zwei zur Innenseite abgewinkelte Laschen 11 zu erkennen. Diese dienen zum Abstützen des Kupplungselementes an einem Kanalunterteil (vgl. Fig. 2).

An der Grundplatte 1 befinden sich zwei gegenüberliegend angeordnete Federelemente 3, die jeweils in einem eigenen dreiseitigen Freischnitt 2 angeordnet sind. Die Enden 4 der Federelemente 3 sind zur Innenseite in dem Freischnitt 2 abgewinkelt.

An der Grundplatte 1 ist ferner in einem Freischnitt 6 eine Erdungsfahne 5 ausgebildet.

Um ein Hereindrehen bzw. Hereinschwenken des erfindungsgemäßen Kupplungselementes in einen Leitungsführungskanal zu ermöglichen, ist die Kopfleiste 8 in etwa U-förmig zur Außenseite gewölbt. Die Kopfleiste 8 besitzt eine Art Rundung, wodurch das Kupplungselement wie ein Scharnier wirkt. Eine zusätzliche Auflagekante 15 in der Kopfleiste 8 ermöglicht ein schräges Einsetzen des Kupplungselementes, um dieses dann nach dem Einsetzen zur Kanalwand zu drehen. Durch die erfindungsgemäß ausgestaltete Kopfleiste 8 erhält man eine Art Hebelwirkung. Im Bereich der Kopfleiste 8 befinden sich Ausnehmungen 9, in welchen Kontaktzähne 10 ausgebildet sind, die an der Außenseite aus der Oberfläche der Grundplatte 1 hervorstehen.

Die beiden Freischnitte 2 für die Federelemente 3 sind im Überlappungsbereich durch einen Steg 14 voneinander getrennt.

In Fig. 1B ist das erfindungsgemäße Kupplungselement von der Innenseite gezeigt. Die Innenseite bezeichnet die Seite, die im eingebauten Zustand des Kupplungselementes zur Kanalmitte weist. Die beiden Federelemente 3 sind in dem Freischnitt 2 nach außen gebogen. Dadurch erfüllen sie ihre Funktion, als Stoßkanten beim Aufschieben der Kanalabschnitte zu dienen. Die Erdungsfahnen 5 können bedarfsweise mit einem Werkzeug in die gewünschte Richtung gebogen werden. An den Laschen 11 der Fußleiste 7 sind Pfeile dargestellt, welche die Einbaurichtung des Kupplungselementes anzeigen. Zu sehen ist auch, wie die seitlichen Stirnleisten 13 ebenfalls zur Innenseite abgewinkelt sind.

In Fig. 2 erkennt man den Einbauzustand des Kupplungselementes in ein Kanalunterteil 20. Am Kanalboden 22 sind Führungen 23 ausgebildet, in denen die Laschen 11 des Kupplungselementes geführt werden. Die Kopfleiste 8 wird in einem Formprofil 21 des Kanalunterteils 22 geführt. Für den Einbau wird zunächst die Kopfleiste 8 in das Formprofil 21 des Kanalunterteils eingelegt. Die Auflagekante 15 dient als Auflagefläche zum Einsetzen des Kupplungselementes in dem Kanalunterteil 20. Nach dem erfolgten Einsetzen wird das Kupplungselement über eine Schwenkbewegung nach unten zur Kanalwand gedrückt. Dabei schneiden sich die Kontaktzähne 10 in das Material des Kanalunterteils 22. Durch die rundförmig ausgestaltete Kopfleiste 8 mit der zusätzlichen Auflagekante 15 kann das Kupplungselement entsprechend der Hebelwirkung mit geringem Kraftaufwand nach unten geklappt werden.

Durch die erfindungsgemäße Geräteeinbaukupplung ist ein kraftaufwändiges Hereinschieben des Verbindungselementes nicht mehr notwendig. Das Kupplungselement erfüllt sowohl die Funktion bei der Verbindung zweier aufeinander stoßender Kabelkanalabschnitte als auch beim Potentialausgleich bei Leitungsführungskanälen aus Metall.

## Patentansprüche

1. Kupplungselement zur Verbindung zweier aufeinanderstoßender Kabelkanalabschnitte und zum Potentialausgleich bei Leitungsführungskanälen aus Metall, bestehend aus einer in etwa rechteckförmigen Grundplatte (1) mit einer Außenseite und einer im Montagezustand zur Kanalmitte weisenden Innenseite, einer Fußleiste (7), einer Kopfleiste (8) und seitlichen Stirnleisten (13), wobei in der Grundplatte (1) wenigstens ein Federelement (3) in einem dreiseitigen Freischnitt (2) angeordnet ist, wobei zumindest ein Teil des Federelementes (3) an der Außenseite aus der Oberfläche der Grundplatte (1) herausragt, **dadurch gekennzeichnet, dass** die Kopfleiste (8) in etwa U-förmig zur Außenseite gewölbt ist und dass ferner an der Außenseite der Grundplatte (1) Kontaktzähne (10) ausgebildet sind, die an der Außenseite gegenüber der Oberfläche der Grundplatte (1) abstehen.

2. Kupplungselement nach Anspruch 1, **dadurch gekennzeichnet, dass** wenigstens zwei Kontaktzähne (10) in einer Ausnehmung (9) freigeschnitten sind.

3. Kupplungselement nach Anspruch 1 oder 2, **dadurch gekennzeichnet, dass** die Kontaktzähne (10) im Bereich der Kopfleiste (8) in einer Reihe angeordnet sind.

4. Kupplungselement nach einem der Ansprüche 1 bis 3, **dadurch gekennzeichnet, dass** zwei Federelemente (3) in einem Freischnitt (2) gegenüberliegend angeordnet sind.

5. Kupplungselement nach Anspruch 4, **dadurch gekennzeichnet, dass** die beiden Federelemente (3) jeweils in einem eigenen Freischnitt (2) angeordnet sind, die zumindest teilweise von einem Steg (14) voneinander getrennt sind.

6. Kupplungselement nach einem der Ansprüche 1 bis 5, **dadurch gekennzeichnet, dass** die Enden (4) der Federelemente (3) zur Innenseite abgewinkelt sind.

7. Kupplungselement nach einem der Ansprüche 1 bis 6, **dadurch gekennzeichnet, dass** an dem Federelement (3) eine aus der Oberfläche der Grundplatte (1) herausragende Nase ausgebildet ist.

8. Kupplungselement nach einem der Ansprüche 1 bis 7, **dadurch gekennzeichnet, dass** an der Grundplatte (1) zusätzlich eine Erdungsfahne (5) in einem Freischnitt (6) ausgebildet ist.

9. Kupplungselement nach einem der Ansprüche 1 bis 8, **dadurch gekennzeichnet, dass** die Stirnleisten (13) und/oder die Fußleiste (7) zur Innenseite abgewinkelt sind.

10. Kupplungselement nach einem der Ansprüche 1 bis 9, **dadurch gekennzeichnet, dass** an der Fußleiste (7) zur Innenseite abgewinkelte Laschen (11) ausgebildet sind.

11. Kupplungselement nach einem der Ansprüche 1 bis 10, **dadurch gekennzeichnet, dass** die Kopfleiste (8) nach unten abgerundet ist und an der Unterseite eine Auflagekante (15) aufweist.

12. Leitungsführungskanal, bestehend aus einem Unterteil (20) und einem Oberteil, der mit einem Kupplungselement nach einem der Ansprüche 1 bis 11 ausgerüstet ist.
